# EUROPEAN PATENT APPLICATION

(11) **EP 4 773 207 A1**
(43) Date of publication of application: **08.07.2026**
(21) Application number: 25227034.3
(22) Date of filing: 23.12.2025
(51) Int. Cl.: H01M 4/131, H01M 4/1391, H01M 4/36, H01M 4/505, H01M 4/525, H01M 4/62, H01M 4/66

(54) **COMPOSITE POSITIVE ELECTRODE ACTIVE MATERIAL INCLUDING A SURFACE-MODIFIED GRAPHENE COATING LAYER AND POSITIVE ELECTRODE INCLUDING THE SAME**

(30) Priority: 02.01.2025 KR 20250000365
(71) Applicant: SAMSUNG SDI CO., LTD., Yongin-si, Gyeonggi-do 17084 (KR)
(72) Inventor: JEONG, Hyejeong, Yongin-si 17084 (KR); LEE, Jungmin, Yongin-si 17084 (KR); JEON, Seongho, Yongin-si 17084 (KR); KIM, Ho, Yongin-si 17084 (KR); CHANG, Mise, Yongin-si 17084 (KR)
(74) Representative: Maiwald GmbH

(57) **Abstract**

A composite positive electrode active material having excellent or suitable adhesiveness and electronic conductivity (e.g., electrical conductivity) and a positive electrode including the composite positive electrode active material are disclosed. The composite positive electrode active material may include an active material core and a graphene coating layer coated on the active material core. The graphene coating layer may partially coat the surface of the active material core. The graphene coating layer may include graphene having a surface modified with an adhesive material.

## Description

### BACKGROUND

### 1. Field

One or more embodiments of the present disclosure relate to a composite positive electrode active material including a graphene coating layer (e.g., a surface-modified graphene coating layer) and a positive electrode including the composite positive electrode active material.

One or more embodiments of the present disclosure relate to a method for manufacturing a positive electrode.

### 2. Description of the Related Art

With the rapid spread of electronic devices, such as mobile phones and/or laptop computers, and/or electric vehicles that utilize batteries, it is important to develop rechargeable batteries having high energy density and high capacity (e.g., high energy capacity). Accordingly, research and development to improve or enhance the performance of rechargeable lithium batteries is actively being conducted.

A rechargeable lithium battery is a battery that includes a positive electrode and a negative electrode, containing active materials capable of intercalating and deintercalating lithium ions, and an electrolyte and produces electrical energy through oxidation and reduction reactions if (e.g., when) lithium ions are intercalated/deintercalated from the positive electrode and the negative electrode.

### SUMMARY

One or more aspects of embodiments of the present disclosure are directed toward a composite positive electrode active (e.g., electrically active) material having adhesiveness and conductivity (e.g., electrical conductivity).

One or more aspects of embodiments of the present disclosure are directed toward a positive electrode having excellent or suitable electrical conductivity and low ionic resistance.

One or more aspects of embodiments of the present disclosure are directed toward a method for manufacturing a positive electrode having excellent or suitable electrical conductivity and low ionic resistance.

Additional aspects of embodiments will be set forth in part in the description which follows and, in part, will be apparent from the description or may be learned by practice of the presented embodiments of the disclosure.

A composite positive electrode active (e.g., electrically active) material according to one or more embodiments of the present disclosure may include an active (e.g., electrically active) material core and a graphene coating layer coated on the active material core. The graphene coating layer may partially coat the surface of the active material core. The graphene coating layer may include graphene having a surface modified with an adhesive material.

A positive electrode according to one or more embodiments of the present disclosure may include a current collector and a positive electrode active (e.g., electrically active) material layer on the current collector, wherein the positive electrode active material layer may include a composite positive electrode active (e.g., electrically active) material including an active (e.g., electrically active) material core and a graphene coating layer on the active material core. The graphene coating layer may partially coat the surface of the active material core. The graphene coating layer may include graphene having a surface modified with an adhesive material.

A method for manufacturing a positive electrode according to one or more embodiments of the present disclosure may include preparing a lithium transition metal composite oxide, preparing graphene having a surface modified with an adhesive material, forming or providing a composite positive electrode active (e.g., electrically active) material through mixing the lithium transition metal composite oxide and the surface-modified graphene and, forming or providing a slurry containing the composite positive electrode active material and a solvent, and applying the slurry on a current collector and drying.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a simplified conceptual diagram illustrating a rechargeable lithium battery according to one or more embodiments of the present disclosure.
FIGS. 2-5 are schematic cross-sectional views of rechargeable lithium batteries according to one or more embodiments of the present disclosure.
FIG. 6 is a cross-sectional view of a positive electrode according to one or more embodiments of the present disclosure.
FIG. 7 is an enlarged diagram of area M in FIG. 6.
FIGS. 8 and 9 are conceptual diagrams illustrating a positive electrode active material according to one or more embodiments of the present disclosure.
FIG. 10 is a flowchart illustrating a method for manufacturing a positive electrode according to one or more embodiments of the present disclosure.
FIG. 11 is a schematic diagram illustrating one method of the manufacturing method.

### DETAILED DESCRIPTION

In order to fully understand the aspects and features of the present disclosure, the subject matter of the present disclosure will be described below in more detail with reference to the accompanying drawings. The subject matter of the present disclosure may, however, be embodied in one or more forms and should not be construed as being limited to one or more embodiments set forth herein, and one or more changes and modifications can be made. Rather, these embodiments are provided as examples so that this disclosure will be thorough and complete and will fully convey the aspects and features of the present disclosure to those skilled in the art to which the present disclosure pertains.

The utilization of "may" if (e.g., when) describing embodiments of the present disclosure refers to "one or more embodiments of the present disclosure."

In the context of the present disclosure and unless otherwise defined, the terms, "use," "using," and "used," may be considered synonymous with the terms, "utilize," "utilizing," and "utilized," respectively.

As used herein, the terms, "substantially," "about," and/or the like, are used as terms of approximation and not as terms of degree and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in the present disclosure is intended to include all higher numerical limitations subsumed therein. Accordingly, Applicant reserves the right to amend this specification, including the claims, to expressly recite any sub-range subsumed within the ranges expressly recited herein.

In the present disclosure, if (e.g., when) an element is referred to as being "on" another element, the element may be directly formed or provided on the other element or intervening elements may be present therebetween. In contrast, if (e.g., when) an element is referred to as being "directly on" another element, there are no intervening elements present therebetween.

In the drawings, thicknesses of one or more components may be exaggerated for effective description of the technical contents. Like reference numerals refer to like elements throughout the specification.

Unless otherwise noted in the description, the expression of singular form may include the expression of plural form.

In the present disclosure, each of the phrases "A or B", "at least one of A and B", "at least one selected from A and B", "at least one of A or B", "A, B, or C", "at least one of A, B, and C", "at least one selected from among A, B, and C", and "at least one of A, B, or C" may include any one of the elements listed together in the corresponding phrase, or all possible or suitable combinations thereof. For example, unless otherwise noted, the phrase "A or B" may indicate "A but not B", "B but not A", and "A and B."

The terms "has/includes" and/or "having/including" used in the description do not exclude the presence or addition of one or more other components. For example, it should be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Also, the terms "comprise(s)/comprising," "include(s)/including," "have/has/having," or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In the present disclosure, the term "combination thereof" may refer to a mixture, a stack, a composite, a copolymer, an alloy, a blend, a reaction product, and/or the like of the constituents.

Unless otherwise defined in this description, a particle diameter may be an average particle diameter. Also, a particle diameter may refer to an average particle diameter (D50), which refers to the diameter of particles at a cumulative volume of about 50 vol% in particle size distribution. The average particle diameter (D50) may be measured by a method that is generally available to or generally used by those skilled in the art, for example, by a particle size analyzer, and/or by using a transmission electron microscope (TEM) image and/or a scanning electron microscope (SEM) image. In one or more embodiments, the average particle diameter may be measured by a measurement device utilizing dynamic light-scattering, wherein data analysis is conducted to count the number of particles for each particle size range, and an average particle diameter (D50) value may then be obtained through calculation. Also, a laser diffraction method may be utilized to measure the average particle diameter. In the laser diffraction method, target particles are dispersed in a dispersion medium, then, introduced into a commercial laser diffraction particle diameter measurement instrument (e.g., MT3000 of Microtrac), and irradiated to ultrasonic waves of about 28 kHz at an output of about 60 W, and the average particle diameter (D50) based on about 50% of particle diameter distribution may be calculated in the measurement instrument.

In the present disclosure, a single particle refers to a particle that exists alone without a grain boundary within the particle and is composed of a single particle, and may refer to a single particle, a monolithic structure, a single-body structure, or a non-agglomerated particle, in which the particles exist as an independent phase without being mutually agglomerated in terms of morphology, and may be, for example, a single crystal. In one or more embodiments, the single particle may be a particle containing one or more crystals. The single particle may be in a form that is separated alone or may exist in a form in which less than 10 single particles are attached to each other.

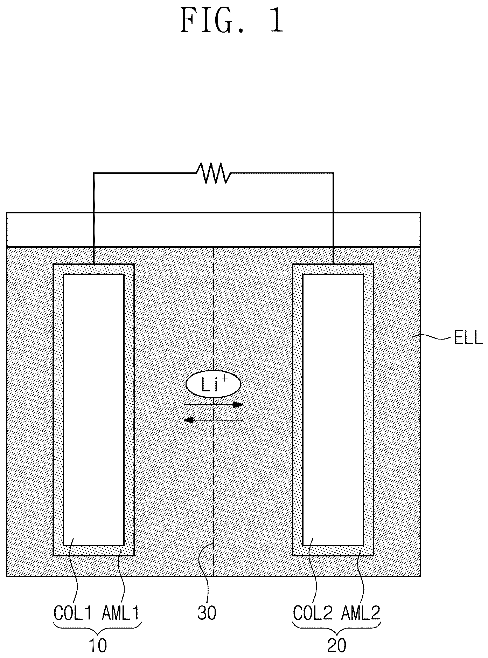

FIG. 1 is a conceptual diagram schematically illustrating a rechargeable lithium battery according to one or more embodiments of the present disclosure. Referring to FIG. 1, the rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other with the separator 30 therebetween. The separator 30 may be between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium to transfer lithium ions between the positive electrode 10 and the negative electrode 20. In the electrolyte ELL, the lithium ions may pass through the separator 30 and move toward the positive electrode 10 or the negative electrode 20.

### Positive Electrode 10

The positive electrode 10 for a rechargeable lithium battery may include a current collector COL1 and a positive electrode active material layer AML1 formed or provided on the current collector COL1. The positive electrode active material layer AML1 may include a positive electrode active material and may further include a binder and/or a conductive (e.g., electrically conductive) material.

For example, the positive electrode 10 may further include an additive that may function as a sacrificial positive electrode.

The content (e.g., amount) of the positive electrode active material in the positive electrode active material layer AML1 may be about 90 wt% to about 99.5 wt% relative to (e.g., based on) 100 wt% of the positive electrode active material layer AML1. The content (e.g., amount) of the binder and the conductive material may each be about 0.5 wt% to about 5 wt% relative to (e.g., based on) 100 wt% of the positive electrode active material layer AML1.

The binder may serve to attach positive electrode active material particles well or suitably to each other and also to attach the positive electrode active material well or suitably to the current collector COL1. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but embodiments of the present disclosure are not limited thereto.

The conductive material may be used to provide conductivity (e.g., electrical conductivity) to an electrode, and any suitable electronically conductive material that does not cause a chemical change (e.g., an undesirable chemical change) in the rechargeable lithium battery may be used. Examples of the conductive material may include carbon-based materials, such as natural graphite, artificial graphite, carbon black, acetylene black, Ketjen black, carbon fibers, carbon nanofibers, and/or carbon nanotubes; metal-based materials containing copper, nickel, aluminum, silver, and/or the like and in the form of metal powder and/or metal fibers; conductive (e.g., electrically conductive) polymers, such as polyphenylene and/or polyphenylene derivatives; or a mixture thereof.

Aluminum (Al) may be used as the current collector COL1, but embodiments of the present disclosure are not limited thereto.

### Positive Electrode Active Material

A compound capable of reversible intercalation and deintercalation of lithium (a lithiated intercalation compound) may be used as the positive electrode active material in the positive electrode active material layer AML1. For example, one or more composite oxides of lithium and a metal selected from among cobalt, manganese, nickel, and a combination thereof may be used.

The composite oxide may be a lithium transition metal composite oxide, and examples may include lithium nickel-based oxides, lithium cobalt-based oxides, lithium manganese-based oxides, lithium iron phosphate-based compounds, cobalt-free lithium-nickel-manganese-based oxides, or a combination thereof.

For example, a compound represented by any one selected from among the chemical formulas may be used: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{b}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂(0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); and/or LiₐFePO₄ (0.90≤a≤1.8).

In the foregoing chemical formulas, A may be nickel (Ni), cobalt (Co), manganese (Mn), or a combination thereof; X may be Al, Ni, Co, Mn, chromium (Cr), iron (Fe), magnesium (Mg), strontium (Sr), vanadium (V), rare earth elements, or a combination thereof; D may be oxygen (O), fluorine (F), sulfur (S), phosphorus (P), or a combination thereof; G may be Al, Cr, Mn, Fe, Mg, lanthanum (La), cerium (Ce), Sr, V, or a combination thereof; and L¹ may be Mn, Al, or a combination thereof.

For example, the positive electrode active material may be a high-nickel-based positive electrode active material in which the nickel content (e.g., amount) is about 80 mol% or more, about 85 mol% or more, about 90 mol% or more, about 91 mol% or more, or about 94 mol% or more and about 99 mol% or less, relative to (e.g., based on) 100 mol% of metals excluding lithium in the lithium transition metal composite oxide. The high-nickel-based positive electrode active material may achieve high capacity (e.g., high energy capacity) and thus may be applied to high-capacity (e.g., high energy capacity), high-density (e.g., high energy density) rechargeable lithium batteries.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material and may further include a binder and/or a conductive (e.g., electrically conductive) material.

For example, the negative electrode active material layer AML2 may include about 90 wt% to about 99 wt% of a negative electrode active material, about 0.5 wt% to about 5 wt% of a binder, and about 0 wt% to about 5 wt% of a conductive (e.g., electrically conductive) material.

The binder may serve to attach negative electrode active material particles well or suitably to each other and also to attach the negative electrode active material well or suitably to the current collector COL2. The binder may be a non-aqueous (e.g., water-insoluble) binder, an aqueous (e.g., water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If (e.g., when) the aqueous binder is used as the negative electrode binder, a cellulose series compound (e.g., a cellulose-based compound) capable of imparting or increasing viscosity may be further included. The cellulose series compound may be used by mixing one or more of carboxymethyl cellulose, hydroxypropyl methylcellulose, methyl cellulose, or an alkali metal salt thereof. The alkali metal may be sodium (Na), potassium (K), or lithium (Li).

The dry binder may be a polymer material capable of fiberization, for example, polytetrafluoroethylene, polyvinylidene fluoride, a polyvinylidene fluoridehexafluoropropylene copolymer, polyethylene oxide, or a combination thereof.

The conductive material may be used to provide conductivity (e.g., electrical conductivity) to the electrode, and any suitable material that does not cause a chemical change (e.g., an undesirable chemical change) and is electronically conductive may be used in the rechargeable lithium battery to be formed or provided. Examples may include carbon-based materials, such as natural graphite, artificial graphite, carbon black, acetylene black, Ketjen black, carbon fibers, carbon nanofibers, and/or carbon nanotubes; metal-based materials containing copper, nickel, aluminum, silver, and/or the like and in the form of metal powder and/or metal fiber; conductive (e.g., electrically conductive) polymers, such as polyphenylene and/or polyphenylene derivatives; or a mixture thereof.

The current collector COL2 may be selected from among copper foil, nickel foil, stainless steel foil, titanium foil, nickel foam, copper foam, a polymer substrate coated with a conductive (e.g., electrically conductive) metal, and a combination thereof.

### Negative Electrode Active Material

The negative electrode active material in the negative electrode active material layer AML2 may include a material capable of reversibly intercalating/deintercalating lithium ions, a lithium metal, an alloy of lithium metal, a material capable of doping and dedoping lithium, and/or a transition metal oxide.

The material capable of reversibly intercalating/deintercalating lithium ions may include a carbon-based negative electrode active material, for example, crystalline carbon, amorphous (e.g., non-crystalline) carbon, or a combination thereof. Examples of the crystalline carbon may include graphite, such as amorphous (e.g., non-crystalline), plate-like (e.g., substantially plate-like), flake-like (e.g., substantially flake-like), spherical (e.g., substantially spherical), or fiber-like (e.g., substantially fiber-like) natural graphite and/or artificial graphite, and examples of the amorphous carbon may include soft carbon, hard carbon, mesophase pitch carbide, calcined coke and/or the like.

As the lithium metal alloy, an alloy of lithium and a metal selected from among Na, K, rubidium (Rb), cesium (Cs), francium (Fr), beryllium (Be), Mg, calcium (Ca), Sr, silicon (Si), antimony (Sb), lead (Pb), indium (In), zinc (Zn), barium (Ba), radium (Ra), germanium (Ge), Al, and tin (Sn) may be used.

As the material capable of doping and dedoping lithium, a Si-based negative electrode active material and/or a Sn-based negative electrode active material may be used. The Si-based negative electrode active material may be silicon, a silicon-carbon composite, SiOₓ (wherein 0 < x ≤ 2; e.g., SiO₂), a Si-Q alloy (where Q is selected from among an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnOₖ (wherein 0 < k ≤ 2; e.g., SnO₂), a Sn-based alloy, or a combination thereof.

The silicon-carbon composite may be a composite of silicon and amorphous (e.g., non-crystalline) carbon. According to one or more embodiments, the silicon-carbon composite may be in the form of silicon particles and amorphous (e.g., non-crystalline) carbon coated on the surface of the silicon particles. For example, a secondary particle (core) in which silicon primary particles are assembled and an amorphous (e.g., non-crystalline) carbon coating layer (shell) on the surface of the secondary particle may be included. The amorphous carbon may also be between the silicon primary particles, so that, for example, the silicon primary particles may be coated with amorphous (e.g., non-crystalline) carbon. The secondary particles may be dispersed and present in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core.

The Si-based negative electrode active material and/or the Sn-based negative electrode active material may be used in combination with a carbon-based negative electrode active (e.g., electrically active) material.

### Separator 30

Depending on the type or kind of rechargeable lithium battery, a separator 30 may be present between the positive electrode 10 and the negative electrode 20. As the separator 30, polyethylene, polypropylene, polyvinylidene fluoride, or a multilayer of two or more thereof may be used, and, a mixed multilayer, such as a polyethylene/polypropylene two-layer separator, a polyethylene/polypropylene/polyethylene three-layer separator, or a polypropylene/polyethylene/polypropylene three-layer separator may be used.

The separator 30 may include a porous substrate and a coating layer including an organic material, an inorganic material, or a combination thereof, on one side or both sides (e.g., two opposite sides) of the porous substrate.

The porous substrate may be a polymer film formed or composed of any one or more polymers selected from polyolefins, such as polyethylene and/or polypropylene, polyesters, such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, polytetrafluoroethylene (PTFE, e.g. Teflon^{™}), or a copolymer or mixture of two or more thereof.

The organic material may include a polyvinylidene fluoride-based polymer and/or a (meth)acrylic polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but embodiments of the present disclosure are not limited thereto.

The organic material and the inorganic material may be mixed and present in one coating layer or may exist in a form in which a coating layer including an organic material and a coating layer including an inorganic material are laminated.

### Electrolyte ELL

The electrolyte ELL for a rechargeable lithium battery may include a non-aqueous (e.g., water-insoluble) organic solvent and a lithium salt.

The non-aqueous organic solvent may act as a medium through which ions involved in the electrochemical reaction of the rechargeable lithium battery may move.

The non-aqueous organic solvent may be a carbonate-based solvent, an ester-based solvent, an ether-based solvent, a ketone-based solvent, an alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, and/or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, and/or the like may be used. In one or more embodiments, as the ketone-based solvent, cyclohexanone and/or the like may be used. As the alcohol-based solvent, ethyl alcohol, isopropyl alcohol, and/or the like may be used, and as the aprotic solvent, nitriles, such as R-CN (wherein R is a linear, branched, or cyclic hydrocarbon group having 2 to 20 carbon atoms and may include a double bond (e.g., a carbon-carbon double bond), an aromatic ring, and/or an ether group); amides, such as dimethylformamide; dioxolanes, such as 1,3-dioxolane and/or 1,4-dioxolane; sulfolanes, and/or the like may be used.

The non-aqueous organic solvent may be used alone or in combination of two or more.

In one or more embodiments, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a substance that is dissolved in an organic solvent and acts as a source of lithium ions within a rechargeable lithium battery, enabling the basic operation of a rechargeable lithium battery and promoting or enhancing the movement of lithium ions between a positive electrode and a negative electrode. Examples of the lithium salt may include one or two or more selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)borate (LiDFOB), lithium difluorobis(oxalato)phosphate (LiDFBOP), and lithium bis(oxalato)borate (LiBOB).

### Rechargeable Lithium Battery

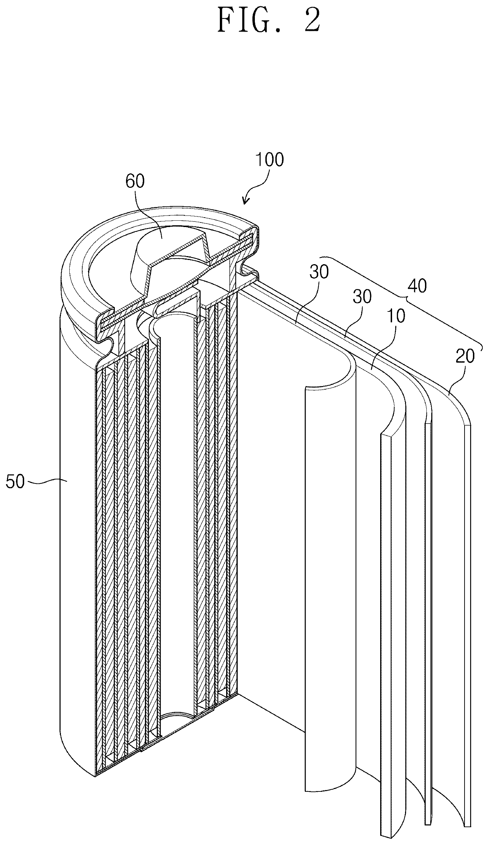

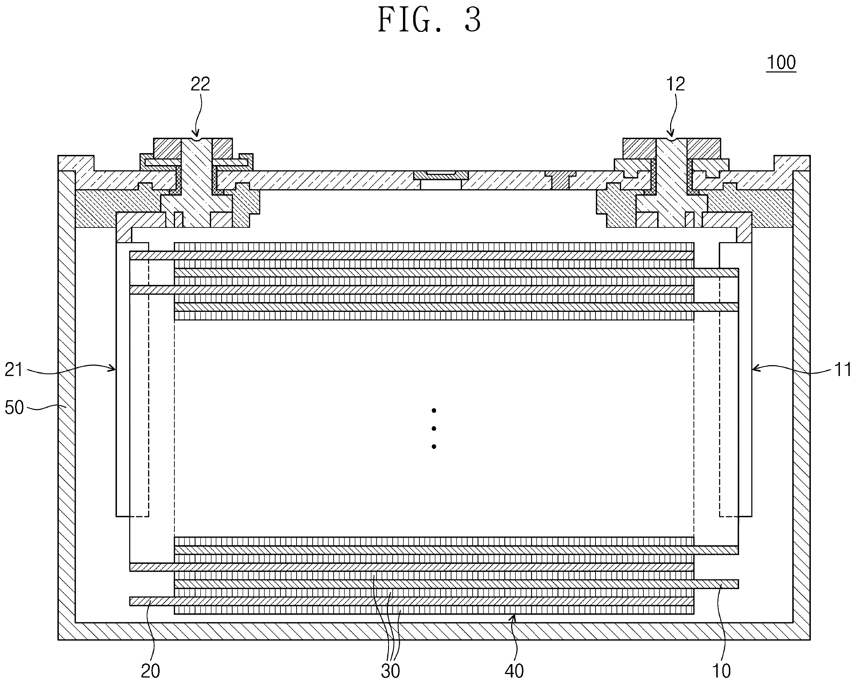

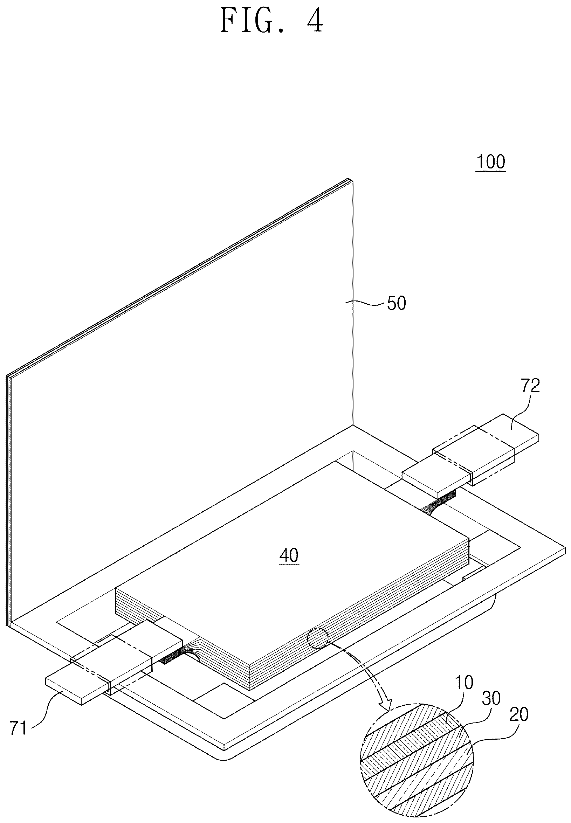

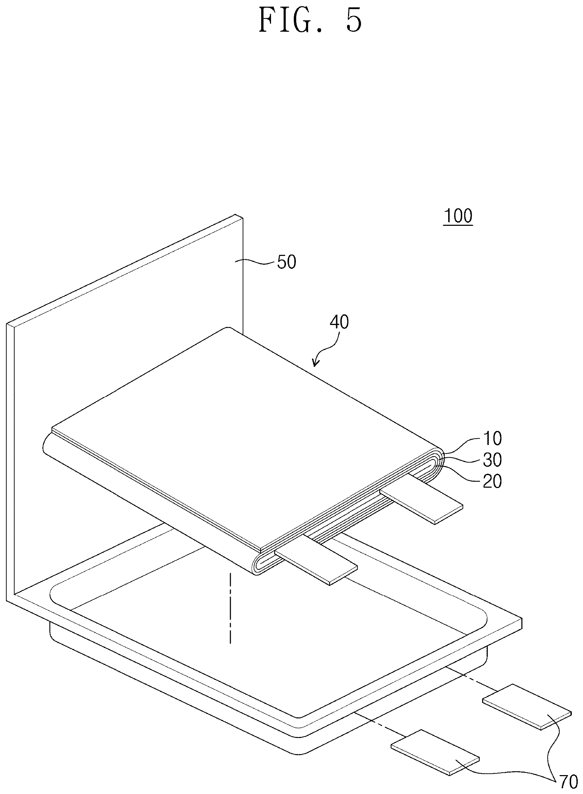

Rechargeable lithium batteries may be classified into cylindrical, prismatic, pouch, and coin types or kinds according to the shape. FIG. 2 to FIG. 5 are schematic diagrams illustrating rechargeable lithium batteries according to one or more embodiments, where FIG. 2 may be a cylindrical battery, FIG. 3 may be a prismatic battery, and FIGS. 4 and 5 may be pouch-type or kind batteries. Referring to FIGS. 2 to 4, a rechargeable lithium battery 100 may include an electrode assembly 40 having a separator 30 between a positive electrode 10 and a negative electrode 20, and a case 50 in which the electrode assembly 40 is accommodated. The positive electrode 10, the negative electrode 20, and the separator 30 may be impregnated with an electrolyte. The rechargeable lithium battery 100 may include a sealing member 60 that seals the case 50 as illustrated in FIG. 2. In FIG. 3, the rechargeable lithium battery 100 may include a positive electrode lead tab 11, a positive electrode terminal 12, a negative electrode lead tab 21, and a negative electrode terminal 22. As illustrated in FIG. 4 and FIG. 5, the rechargeable lithium battery 100 may include electrode tabs 70, for example, a positive electrode tab 71 and a negative electrode tab 72, which serve as electrical paths to induce the current formed in the electrode assembly 40 to the outside.

The rechargeable lithium battery according to one or more embodiments of the present disclosure may reduce the amounts of a binder and a conductive (e.g., electrically conductive) material added separately, by including a composite electrode active (e.g., electrically active) material having excellent or suitable adhesiveness and conductivity (e.g., electrical conductivity). As a result, the capacity and charge and discharge characteristics of the rechargeable lithium battery may be improved or enhanced by increasing the ratio of the active material in the electrode. Hereinafter, a rechargeable lithium battery including a composite electrode active (e.g., electrically active) material will be described in more detail, and descriptions of substantially the same matters as those described with reference to FIGS. 1 to 5 may not be provided, and differences will be described in more detail.

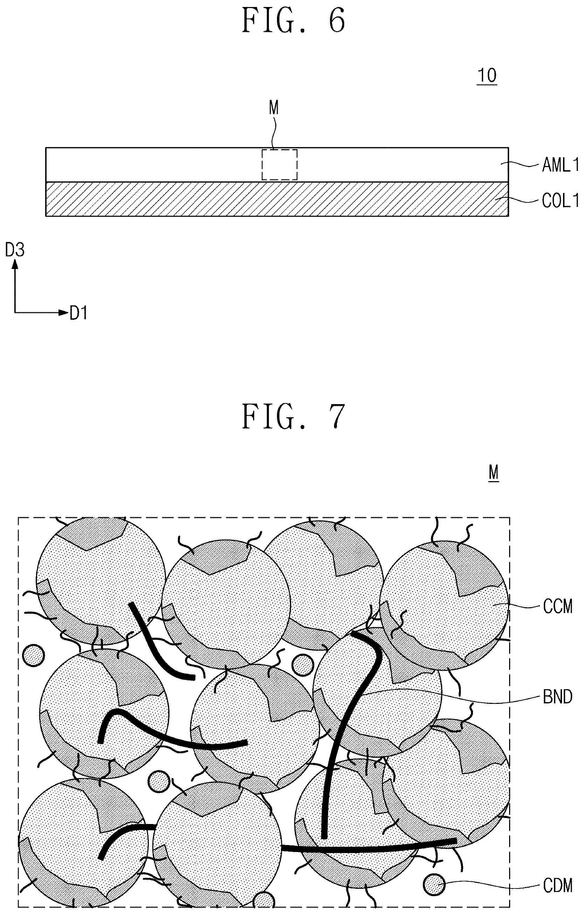

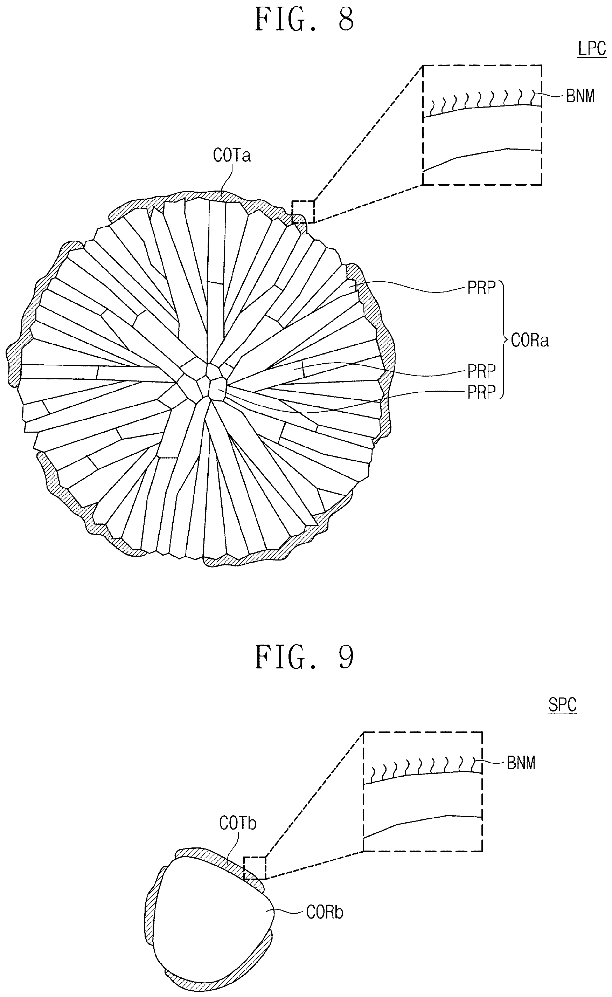

FIG. 6 is a cross-sectional view of a positive electrode 10 according to one or more embodiments of the present disclosure. FIG. 7 is an enlarged diagram of area M in FIG. 6. FIG. 8 and FIG. 9 are conceptual diagrams illustrating a positive electrode active material according to one or more embodiments of the present disclosure.

Referring to FIG. 6 and FIG. 7, a positive electrode 10 according to one or more embodiments of the present disclosure may include a current collector COL1 and a positive electrode active material layer AML1 on the current collector COL1.

The positive electrode active material layer AML1 may include a composite positive electrode active material CCM, a binder BND, and a conductive material CDM.

The positive electrode active material layer AML1 may include a composite positive electrode active material CCM, thereby minimizing or reducing the amounts of the binder BND and the conductive material CDM in the positive electrode active material layer AML1.

In one or more embodiments, the amount of the composite positive electrode active material CCM in the positive electrode active material layer AML1 may be about 99 wt% or more with respect to 100 wt% (or based on 100 wt%) of the positive electrode active material layer AML1. For example, the amount may be about 99 wt% or more, about 99.2 wt% or more, or about 99.4 wt% or more. As a result, the amounts of the binder BND and the conductive material CDM additionally added into the positive electrode active material layer AML1 may be minimized or reduced. For example, with respect to 100 wt% (or based on 100 wt%) of the positive electrode active material layer AML1, the total weight of the binder and the conductive material may be about 1 wt% or less, about 0.8 wt% or less, or about 0.6 wt% or less.

In one or more embodiments, the amount of the composite positive electrode active material CCM in the positive electrode active material layer AML1 may be about 92 wt% to about 99.5 wt%, about 92 wt% to about 99 wt%, about 93 wt% to about 98 wt%, or about 94 wt% to about 97 wt%.

In one or more embodiments, the composite positive electrode active material CCM may include at least one selected from a large particle LPC and a small particle SPC. In one or more embodiments, the composite positive electrode active material CCM may include the large particle LPC and/or the small particle SPC. In one or more embodiments, the composite positive electrode active material CCM may have a bimodal form including both (e.g., simultaneously) the large particle LPC and the small particle SPC. The composite positive electrode active material CCM in a bimodal form may have an improved or enhanced integration density of the positive electrode active material layer AML1 by filling the gaps between the large particles LPC with the small particles SPC.

The average particle diameter DLP of the large particle LPC may be greater than the average particle diameter DSP of the small particle DSP.

In one or more embodiments, the average particle diameter DLP of the large particles LPC may be about 6.0 µm to about 20.0 µm, about 10.0 µm to about 20.0 µm, or about 10.0 µm to about 15.0 µm. For example, the average particle diameter DSP of the small particles SPC may be about 1.0 µm to about 6.0 µm, about 2.0 µm to about 5.0 µm, or about 3.0 µm to about 5.0 µm. In one or more embodiments, the average particle diameter may be obtained by selecting about 30 large particles PC and small particles SP, respectively, as particles in an electron microscope image of a composite positive electrode active material CCM, measuring particle diameters, and taking the diameter of the particles having a cumulative volume of 50% by volume in particle size distribution as the average particle diameter. In one or more embodiments, the average particle diameter may be measured by a particle size analyzer, and the diameter of particles having a cumulative volume of 50% by volume in the particle size distribution may be taken as the average particle diameter.

The composite positive electrode active material CCM may include an active material core COR; and a graphene coating layer COT coated on the active material core COR. For example, each of the large particle LPC and the small particle SPC may include a core COR and a graphene coating layer COT.

Referring to FIG. 8, the large particle LPC according to one or more embodiments of the present disclosure may include an active material core CORa and a graphene coating layer COTa. The active material core CORa may have a polycrystal form and may include a secondary particle in which at least two or more primary particles PRP are aggregated. The active material core CORa may be spherical (e.g., substantially spherical) or elliptical (e.g., substantially elliptical). The graphene coating layer COTa may include graphene having a surface modified with an adhesive material BNM.

In one or more embodiments, different from FIG. 8, the active material core CORa of the large particle LPC may be in the form of a single particle, which indicates that it exists alone without a grain boundary within the particle and is composed of a single particle, and may indicate a single particle, a monolithic structure, a single-body structure, or a non-agglomerated particle, in which the particles do not coagulate with each other in terms of morphology, and may be, for example, a single crystal. For example, the large particle LPC in the form of a single particle may include a lithium cobalt-based oxide as a positive electrode active (e.g., electrically active) material.

Referring to FIG. 9, the small particle SPC according to one or more embodiments of the present disclosure may include an active material core CORb and a graphene coating layer COTb. The active material core CORb may have the form of a single particle, which indicates that it exists alone without a grain boundary within the particle and is composed of a single particle, and may indicate a single particle, a monolithic structure, a single-body structure, or a non-agglomerated particle, in which the particles do not coagulate with each other in terms of morphology, and may be, for example, a single crystal. The composite positive electrode active material layer AML may achieve high capacity (e.g., high energy capacity), high energy density, and improved or enhanced life characteristics by including the small particle SPC. The graphene coating layer COTb may include graphene having a surface modified with an adhesive material BNM.

Referring to FIGS. 8 and 9, the active material core CORa of the large particle LPC and the active material core CORb of the small particle SPC may each include the lithium transition metal composite oxide as described in one or more embodiments with reference to FIG. 1.

In one or more embodiments, the active material core CORa of the large particle LPC and the active material core CORb of the small particle SPC may each include at least one selected from a lithium nickel-based oxide and a lithium cobalt-based oxide. The lithium nickel-based oxide may include lithium (Li) and nickel (Ni) as a transition metal. The amount of nickel (Ni) included in the lithium nickel-based oxide is not limited.

In one or more embodiments, the lithium nickel-based oxide may be a lithium nickel-based oxide including a high content (e.g., amount) of nickel (Ni). For example, the lithium nickel-based oxide may be a lithium nickel composite oxide in which the nickel (Ni) content (e.g., amount) among metals other than lithium is about 60 mol% or more, about 80 mol% or more, about 90 mol% or more, or about 91 mol% or more, and about 100 mol% or less, about 99.9 mol% or less, or about 99 mol% or less. For example, the lithium nickel-based oxide may be a lithium nickel composite oxide in which the mole number of nickel (Ni) relative to (e.g., based on) the total mole number of transition metals is about 60 mol% or more, about 80 mol% or more, about 90 mol% or more, or about 91 mol% or more, and about 100 mol% or less, about 99.9 mol% or less, or about 99 mol% or less. If (e.g., when) the nickel (Ni) content (e.g., amount) satisfies the foregoing ranges, the composite positive electrode active material CCM may realize high capacity (e.g., high energy capacity) and high performance (e.g., high energy performance or high electrical performance).

For example, the lithium nickel-based oxide may be represented by Chemical Formula 1.

Chemical Formula 1 Liₐ₁Niₓ₁M¹_{y1}M²_{z1}O_{2-b1}X_{b1}

In Chemical Formula 1, 0.9≤a1≤1.8, 0.8≤x1≤1, 0≤y1≤0.2, 0≤z1≤0.2, 0.9≤x1+y1+z1≤1.1, and 0≤b1≤0.1, and M¹ and M² may each independently be at least one element selected from the group consisting of Al, boron (B), Ba, Ca, Ce, Co, Cr, copper (Cu), Fe, Mg, Mn, molybdenum (Mo), niobium (Nb), Si, Sr, titanium (Ti), V, tungsten (W), and zirconium (Zr), and X may be at least one element selected from the group consisting of F, P and S.

For example, in Chemical Formula 1, 0.85≤x1≤1, 0≤y1≤0.15, and 0≤z1≤0.15 or 0.9≤x1≤1, 0≤y1≤0.1, and 0≤z1≤0.1.

For example, x1+y1+z1=1.

In one or more embodiments, the lithium nickel-based oxide may be represented by Chemical Formula 2. The compound represented by Chemical Formula 2 may be a lithium nickel cobalt-based composite oxide.

Chemical Formula 2 Liₐ₂Niₓ₂Co_{y2}M³_{z2}O_{2-b2}X_{b2}

In Chemical Formula 2, 0.9≤a2≤1.8, 0.8≤x2<1, 0<y2≤0.2, 0≤z2≤0.2, 0.9≤x2+y2+z2≤1.1, and 0≤b2≤0.1, M³ may be at least one element selected from the group consisting of Al, B, Ba, Ca, Ce, Cr, Fe, Mg, Mn, Mo, Nb, Si, Sr, Ti, V, W, and Zr, and X may be at least one element selected from the group consisting of F, P and S.

For example, in Chemical Formula 2, 0.85≤x2≤0.99, 0.01≤y2≤0.15, and 0.01≤z2≤0.15 or 0.9≤x2≤0.99, 0.01≤y2≤0.1, and 0.01≤z2≤0.1.

For example, x2+y2+z2=1.

In one or more embodiments, the lithium nickel-based oxide may be represented by Chemical Formula 3. The compound represented by Chemical Formula 3 may be a lithium nickel cobalt aluminum oxide or lithium nickel cobalt manganese oxide.

Chemical Formula 3 Liₐ₃Niₓ₃Co_{y3}M⁴_{z3}M⁵_{w3}O_{2-b3}X_{b3}

In Chemical Formula 3, 0.9≤a3≤1.8, 0.8≤x3≤0.98, 0.01≤y3≤0.19, 0.01≤z3≤0.19, 0≤w3≤0.19, 0.9≤x3+y3+z3+w3≤1.1, and 0≤b3≤0.1, M⁴ may be at least one element selected from the group consisting of Al and Mn, M⁵ may be at least one element selected from the group consisting of B, Ba, Ca, Ce, Cr, Fe, Mg, Mo, Nb, Si, Sr, Ti, V, W, and Zr, and X may be at least one element selected from the group consisting of F, P and S.

For example, in Chemical Formula 3, 0.85≤x3≤0.98, 0.01≤y3≤0.14, 0.01≤z3≤0.14, and 0≤w3≤0.14 or 0.9≤x3≤0.98, 0.01≤y3≤0.09, 0.01≤z3≤0.09, and 0≤w3≤0.09.

For example, x3+y3+z3+w3=1.

The lithium cobalt-based oxide may include lithium (Li) and cobalt (Co) as a transition metal. For example, the lithium cobalt-based oxide may be represented by Chemical Formula 4.

Chemical Formula 4 Liₐ₄COₓ₄M⁶₍₁₋ₓ₄₎O₂

In Chemical Formula 4, 0.9≤a4≤1.8, and 0.7≤x4≤1, and M⁶ may be at least one element selected from the group consisting of Al, B, Ba, Ca, Ce, Cr, Cu, F, Fe, Mg, Mn, Mo, Ni, P, S, selenium (Se), Si, Sr, Ti, V, W, Y, Zn, and Zr.

In Chemical Formula 4, x4 may represent the molar content (e.g., amount) of cobalt, and may be, for example, 0.8≤x4≤1, 0.9≤x4≤1, or 0.95≤x4≤1.

The graphene coating layer COT of the composite positive electrode active material CCM may be on the active material core COR. For example, the graphene coating layer COTa may be on the active material core CORa of the large particle LPC, and the graphene coating layer COTb may be on the active material core CORb of the small particle SPC.

The composite positive electrode active material CCM may have excellent or suitable electronic conductivity (e.g., electrical conductivity) and ionic conductivity because the graphene coating layer COT is only on a portion of the outer surface of the active material core COR. In one or more embodiments, the graphene coating layer COT may have excellent or suitable adhesiveness with other particles because it includes an adhesive functional group as described herein. Therefore, the positive electrode active material layer AML1 may reduce the amounts of the binder BND and the conductive material CDM in the positive electrode active material layer AML1 by including the composite positive electrode active material CCM.

In one or more embodiments, the positive electrode active material layer AML1 may not include the binder BND and the conductive material CDM. For example, excellent or suitable adhesiveness and electronic conductivity (e.g., electrical conductivity) may be secured with only the composite positive electrode active material CCM. By not including a separate binder BND and a conductive material CDM, the amount of the lithium transition metal composite oxide, which is the positive electrode active material, may increase, thereby improving or enhancing cell performance. For example, the total amount of the binder BND and the conductive material CDM in the positive electrode active material layer AML1 may be about 0.1 wt% or less, about 0.05 wt% or less, or about 0.01 wt% or less.

The graphene coating layer COT may include a plurality of graphenes separated from each other on the surface of the active material core COR. For example, the lateral size of each graphene may be about 0.1 µm to about 1000 µm. For example, the lateral size of graphene may be about 0.1 µm to about 500 µm, about 0.1 µm to about 200 µm, about 0.1 µm to about 100 µm, about 0.1 µm to about 50 µm, about 0.1 µm to about 10 µm, about 0.1 µm to about 5 µm, or about 0.1 µm to about 3 µm. The lateral size of graphene may be interpreted as the longest distance among the distances connecting any two ends on the plane of a graphene sheet.

In one or more embodiments, the graphene coating layer COT may include graphene having a surface modified with an adhesive material BNM. Graphene may be one of the isotopes of carbon and may have a structure in which carbon atoms gather to form a two-dimensional plane. Each carbon atom may form a hexagonal lattice, and a carbon atom may be at the vertex of the hexagon. The graphene may be in the form of a sheet (e.g., a substantially sheet). For example, the graphene having a surface modified with an adhesive material) may be graphene (pure graphene without oxygen bonds), graphene oxide (GO), and/or reduced graphene oxide (rGO), each having a surface modified with an adhesive material. For example, the graphene coating layer COT may include at least one of graphene, graphene oxide (GO), or reduced graphene oxide (rGO).

The graphene having a surface modified with an adhesive material may include a case in which an adhesive material is chemically attached, substituted, and/or coated on the surface of graphene. For example, the adhesive material may be stably fixed to the surface of graphene through electrostatic bonding, covalent bonding, hydrogen bonding, and/or van der Waals interaction, so as to modify the surface.

In one or more embodiments, the adhesive material may be a polymer material having adhesive ability.

In one or more embodiments, the adhesive material may be a polymer including at least one functional group selected from the group consisting of a hydroxyl group, a carboxyl group, an amine group, an aniline group, a nitrile group, an ester group, a carbon-carbon double bond, an imide group, a phenyl group, a urethane group, a butyral group, and a lactam group. In one or more embodiments, the weight average molecular weight of the adhesive material may be about 5 kDa to about 2,000 kDa.

For example, the adhesive material may include at least one selected from among polyvinyl alcohol (PVA), polyvinyl acetate (PVAc), polyacrylic acid (PAA), polyethylene (PE), polyimide (PI), polystyrene (PS), polyurethane (PU), polyacrylonitrile (PAN), polyvinyl butyral (PVB), polyisoprene (Plpr), polyaniline (PANi), and polyvinylpyrrolidone (PVP). The graphene coating layer COT may be on a portion of the outer surface of the active material core COR. For example, the ratio of the area occupied by (or coated by) the graphene coating layer COT to the outer surface area of the active material core COR may be about 30% to about 70%. For example, the ratio of the area occupied by (or coated by) the graphene coating layer COT to the outer surface area of the active material core COR may be about 30% to about 50%, about 30% to about 45%, or about 35% to about 45%. Because the ratio of the area occupied by (or coated by) the graphene coating layer COT is within the foregoing ranges, the electronic conductivity (e.g., electrical conductivity) and adhesiveness improvement or enhancement effects due to the surface-modified conductive (e.g., electrically conductive) material may be secured. In one or more embodiments, the graphene coating layer COT may be prevented from acting as an obstacle to lithium ion movement, thereby improving or enhancing ionic conductivity.

In one or more embodiments, the ratio of the outer surface area occupied by (or coated by) the graphene coating layer COT to the outer surface area of the active material core COR may be measured by an electron microscope, such as a scanning electron microscope (SEM) and/or a transmission electron microscope (TEM). For example, the ratio of the area occupied by (or coated by) the graphene coating layer COT to the outer surface area of the active material core COR may be measured by the following methods: i) randomly selecting about 30 composite positive electrode active materials from an electron microscope image; ii) measuring the ratio of the area occupied by (or coated by) the graphene coating layer to the outer surface area of the active material core of each of the 30 composite positive electrode active materials; and iii) calculating the average value of the measured values. For example, the method ii) may be achieved by measuring the boundary between the active material core COR and the graphene coating layer COT using an electron microscope image and image analysis software, such as ImageJ and/or MATLAB, and calculating the ratio of the area occupied (or coated) by the graphene coating layer COT among the outer surface area of the active material core COR.

For example, the ratio of each element (for example, the ratio of carbon) present on the outer surface of the active material core COR in the composite positive electrode active material CCM observed by SEM may be measured through energy dispersive X-ray spectroscopy (EDS). The ratio of carbon present on the outer surface of the active material core COR may be defined as the ratio of the area occupied by (or coated by) the graphene coating layer COT.

In one or more embodiments, by confirming a characteristic peak through X-ray photoelectron spectroscopy (XPS) analysis, it may be confirmed whether the carbon layer measured using the EDS is a graphene coating layer.

In one or more embodiments, the thickness of the graphene coating layer COT may be about 0.2 nm to about 500 nm, and, for example, about 2 nm to about 100 nm. By having the foregoing ranges, a high energy density electrode having excellent or suitable adhesive strength and conductivity (e.g., electrical conductivity) may be achieved.

In one or more embodiments, the weight of the active material core COR relative to (e.g., based on) 100 wt% of the composite positive electrode active material CCP may be about 98 wt% or more. In one or more embodiments, the weight of the active material core COR relative to (e.g., based on) 100 wt% of the composite positive electrode active material CCP may be about 98.0 wt% to about 99.9 wt%.

In one or more embodiments, the composite positive electrode active material CCM may further include a transition metal coating part on the surface of each of the large particle LPC or the small particle SPC. The transition metal coating part may be on the entirety or at least a portion of the surface of each of the large particle LPC or the small particle SPC. The transition metal coating part may be between the active material cores CORa and CORb, and the graphene coating layers COTa and COTb. For example, the composite positive electrode active material CCM may further include a transition metal coating part on the surface of the primary particle PRP inside the large particle LPC, for example, coated along the interface of the primary particles. For example, the transition metal coating part may include nickel, cobalt, aluminum, and/or the like, but embodiments of the present disclosure are not limited thereto. Each of the large particle LPC and/or the small particle SPC may include a transition metal coating part, so that the collapse of the structure due to repeated charge and discharge may be effectively or suitably suppressed or reduced, thereby improving or enhancing the life characteristics.

Referring again to FIG. 7, the conductive material CDM may include, for example, the carbon-based material as described in one or more embodiments. For example, the carbon-based material may include at least one selected from the group consisting of natural graphite, artificial graphite, carbon black, acetylene black, Ketjen black, carbon fiber, carbon nanofiber, and/or carbon nanotube. The conductive material CDM may improve or enhance the conductivity (e.g., electrical conductivity) between the composite positive electrode active materials CCM.

### Method for Manufacturing Positive Electrode

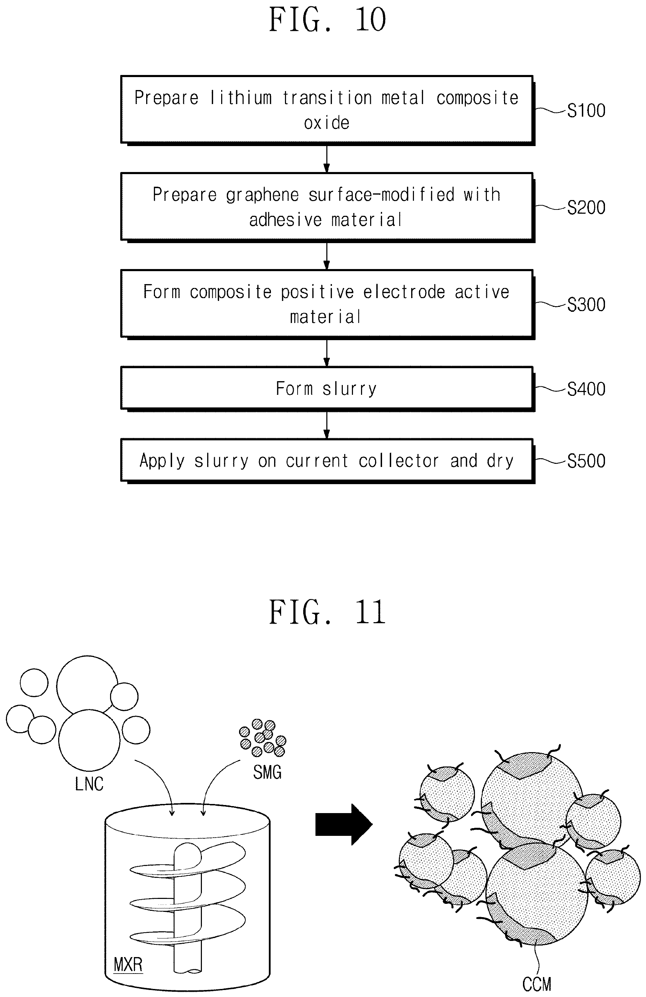

FIG. 10 is a flowchart illustrating a method for manufacturing a positive electrode according to one or more embodiments of the present disclosure. FIG. 11 is a schematic diagram illustrating one method of the manufacturing methods.

Referring to FIG. 10, a method for manufacturing a positive electrode according to one or more embodiments of the present disclosure may include: preparing a lithium transition metal composite oxide (S100); preparing graphene surface-modified with an adhesive material (or graphene having a surface modified with an adhesive material) (S200); forming or providing a composite positive electrode active material by coating the surface-modified graphene on the surface of a lithium nickel-based oxide (S300); forming or providing a slurry containing the composite positive electrode active material and a solvent (S400); and applying the slurry on a current collector and drying (S500).

The composite positive electrode active material CCM may include the active material core COR as described in one or more embodiments with reference to FIGS. 6 to 9. The active material core COR may include a lithium transition metal composite oxide. The lithium transition metal composite oxide may include, for example, at least one selected from a lithium nickel-based oxide and lithium cobalt-based oxide.

A method for manufacturing a positive electrode according to one or more embodiments may include preparing graphene surface-modified with an adhesive material (or graphene having a surface modified with an adhesive material) (S200).

For example, graphene having a surface modified with an adhesive material may be formed or provided by mixing graphene and an adhesive material. Through the method, the surface of the graphene may be modified with the adhesive material. Graphene having a surface modified with an adhesive material may include a case where the adhesive material is chemically attached, substituted, and/or coated on the surface of the graphene. For example, the adhesive material may be stably fixed to the surface of the graphene through electrostatic bonding, covalent bonding, hydrogen bonding, and/or van der Waals interaction, so that the surface of the graphene may be modified.

The adhesive material may be substantially the same as the adhesive material as described in one or more embodiments with reference to FIGS. 6 to 9.

In one or more embodiments, the adhesive material may be a polymer material having adhesive properties.

In one or more embodiments, the adhesive material may be a polymer including at least one functional group selected from the group consisting of a hydroxyl group, a carboxyl group, an amine group, an aniline group, a nitrile group, an ester group, a carbon-carbon double bond, an imide group, a phenyl group, a urethane group, a butyral group, and a lactam group.

For example, the adhesive material may include at least one selected from among polyvinyl alcohol (PVA), polyvinyl acetate (PVAc), polyacrylic acid (PAA), polyethylene (PE), polyimide (PI), polystyrene (PS), polyurethane (PU), polyacrylonitrile (PAN), polyvinyl butyral (PVB), polyisoprene (Plpr), polyaniline (PANi), and polyvinylpyrrolidone (PVP).

In one or more embodiments, the surface-modified graphene may be obtained by adding and mixing about 20 wt% to about 80 wt% of the adhesive material with respect to 100 wt% (or based on 100 wt%) of the total weight of the graphene and the adhesive material.

In one or more embodiments, by mixing of the graphene and the adhesive material may be performed by mixing the graphene and the adhesive material in a solvent to obtain a surface-modified graphene dispersion. For example, the graphene dispersion and the adhesive material may be added to N-methylpyrrolidone (NMP), which is a solvent, and mixed to obtain a surface-modified graphene dispersion. The surface-modified graphene dispersion may be used in a wet process as described herein.

For example, the graphene dispersion may include at least one of graphene (pure graphene without oxygen bonds), graphene oxide (GO), reduced graphene oxide (rGO), or a combination thereof.

In one or more embodiments, the preparing of the graphene surface-modified with an adhesive material (or the graphene having a surface modified with an adhesive material) (S200) may further include drying the surface-modified graphene dispersion. For example, surface-modified graphene in a powder form may be obtained by freeze-drying the surface-modified graphene dispersion. The surface-modified graphene in a powder form may be used in a dry process as described herein. The method for manufacturing the positive electrode according to one or more embodiments may include forming or providing a composite positive electrode active material by coating surface-modified graphene on the surface of an active material core (S300).

In one or more embodiments, the coating of the surface-modified graphene on the surface of an active material core may be performed by a dry process. Referring to FIG. 11, the composite positive electrode active material CCM may be formed or provided by mixing a lithium transition metal composite oxide LNC and surface-modified graphene SMG in a mixer MXR. For example, by adding the surface-modified graphene SMG to the active material core COR as described in one or more embodiments with reference to FIGS. 7 to 9 and mixing in a mixer MXR, a composite positive electrode active material CCM may be obtained. For example, by adding about 0.01 wt% to about 1.5 wt% of the surface-modified graphene with respect to 100 wt% (or based on 100 wt%) of the total weight of the lithium transition metal composite oxide and the surface-modified graphene, and mixing, a composite positive electrode active material CCM may be obtained.

Through the method, the surface-modified graphene SMG may be coated on the surface of the lithium active material core COR. For example, the composite positive electrode active material may be prepared. Thereafter, the composite positive electrode active material may be dispersed in a solvent to obtain a composite positive electrode active material slurry.

In one or more embodiments, the coating of the surface-modified graphene on the surface of the active material core may be performed by a wet process. For example, the active material core may be added to the surface-modified graphene dispersion and stirred to obtain a composite positive electrode active material slurry. For example, the stirring may be performed at room temperature for about 12 hours or more.

In one or more embodiments, the binder BND and the conductive material CDM as described in one or more embodiments with reference to FIGS. 6 and 7 may be further added to the composite positive electrode active material slurry. In one or more embodiments, a binder BND and conductive material CDM may not be separately added to the composite positive electrode active material slurry.

After applying the slurry on a current collector, the positive electrode may be manufactured by drying and rolling (S500).

For example, the slurry may be applied on the current collector to have a loading level of about 20 g/cm² to about 30 g/cm². Thus, the positive electrode 10 according to FIG. 6 may be formed or provided. The rolling may be performed by a rolling mill. The rolling may be performed so that the positive electrode active material layer AML1 may have a desired thickness. For example, the rolling may be performed so that the thickness of the positive electrode active material layer AML1 may be about 100 µm or less, about 90 µm or less, about 80 µm or less, about 70 µm or less, or about 60 µm or less.

Hereinafter, Examples and Comparative Examples of the present disclosure will be described. However, the examples below are only illustrations of the present disclosure, and embodiments of the present disclosure are not limited thereto.

### Preparation Example 1. Graphene Surface-modified with Adhesive Material (or Graphene Having a Surface Modified with Adhesive Material) (PAA)

Graphene surface-modified with an adhesive material (or graphene having a surface modified with an adhesive material) was prepared by stirring polyacrylic acid (PAA) and reduced graphene oxide at a weight ratio of about 1:1 in an N-methylpyrrolidone (NMP) solvent at room temperature for about 6 hours. Then, the resultant was freeze-dried to obtain adhesive-functional graphene powder.

### Preparation Example 2. Graphene Surface-modified with Adhesive Material (or Graphene Having a Surface Modified with Adhesive Material) (PVA)

Graphene surface-modified with an adhesive material (or graphene having a surface modified with an adhesive material) was prepared by stirring polyvinyl alcohol (PVA) and reduced graphene oxide at a weight ratio of about 1:1 in an NMP solvent at room temperature for about 8 hours. Then, the resultant was freeze-dried to obtain adhesive-functional graphene powder.

### Example 1

### Composite Positive Electrode Active Material

Lithium cobalt-based oxide (LiCoO₂, LCO) large particles having an average particle diameter of about 12 µm were prepared. The lithium cobalt-based oxide and the surface-modified graphene prepared according to Preparation Example 1 were added to a mixer (NOBILTA (Hosokawa Micron Corporation)) at a weight ratio of about 99:1 and mixed at about 2500 rpm for about 8 minutes to prepare a composite positive electrode active material CCM having a graphene coating layer COT formed or provided thereon.

### Positive Electrode

99.5 wt% of the composite positive electrode active material CCM, 0.25 wt% of a polyvinylidene fluoride (PVDF) binder, and 0.25 wt% of a conductive (e.g., electrically conductive) material (carbon nanotube) were mixed in an N-methylpyrrolidone solvent to prepare a positive electrode slurry. The positive electrode slurry was applied onto an aluminum current collector, dried, and rolled to manufacture a positive electrode. The positive electrode slurry was applied onto the current collector so as to have a loading level of about 20 g/cm². The rolling was performed using a rolling mill so that the total thickness of the current collector and the positive electrode active material layer AML1 was about 62.5 µm.

### Manufacture of Half-cell

A coin-type or kind half-cell was manufactured using the positive electrode, a lithium metal counter electrode, and an electrolyte. The electrolyte used was ethylene carbonate and diethyl carbonate (volume ratio of about 50:50) containing 1.0 M LiPF₆ dissolved therein.

### Example 2

A composite positive electrode active material, a positive electrode, and a half-cell were formed or provided in substantially the same manner as in Example 1, except that, in the preparation of a composite positive electrode active material, the lithium cobalt-based oxide and the surface-modified graphene prepared according to Preparation Example 1 were added to a mixer (NOBILTA (Hosokawa Micron Corporation)) at a weight ratio of about 99.2:0.8, and mixed at about 3000 rpm for about 8 minutes.

### Example 3

A composite positive electrode active material, a positive electrode, and a half-cell were formed or provided in substantially the same manner as in Example 1, except that, in the preparation of a composite positive electrode active material, the lithium cobalt-based oxide and the surface-modified graphene prepared according to Preparation Example 1 were added to a mixer (NOBILTA (Hosokawa Micron Corporation)) at a weight ratio of about 99.4:0.6, and mixed at about 3000 rpm for about 6 minutes.

### Example 4

### Composite Positive Electrode Active Material

Lithium cobalt-based oxide (LiCoO₂, LCO) large particles having an average particle diameter of about 12 µm were prepared. The lithium cobalt-based oxide and the surface-modified graphene prepared according to Preparation Example 2 were added to a mixer (NOBILTA (Hosokawa Micron Corporation)) at a weight ratio of about 99:1, and mixed at about 2500 rpm for about 8 minutes, thereby preparing a composite positive electrode active material CCM having a graphene coating layer COT formed or provided thereon.

### Positive Electrode

99.5 wt% of the composite positive electrode active material CCM, 0.25 wt% of a binder, and 0.25 wt% of a conductive (e.g., electrically conductive) material (carbon nanotube) were mixed in an N-methylpyrrolidone solvent to prepare a positive electrode slurry. The positive electrode slurry was applied to an aluminum current collector, dried, and rolled to form or provide a positive electrode. The positive electrode slurry was applied to the current collector so as to have a loading level of about 20 g/cm². The rolling was performed using a rolling mill so that the total thickness of the current collector and positive electrode active material layer AML1 was about 63 µm.

### Manufacture of Half-cell

A coin-type or kind half-cell was manufactured using the positive electrode, a lithium metal counter electrode, and an electrolyte. The electrolyte used was ethylene carbonate and diethyl carbonate (volume ratio of about 50:50) containing 1.0 M LiPF₆ dissolved therein.

### Example 5

### Composite Positive Electrode Active Material

Lithium cobalt-based oxide (LiCoO₂, LCO) large particles having an average particle diameter of about 12 µm were prepared. The lithium cobalt-based oxide and the surface-modified graphene prepared according to Preparation Example 1 were added to a mixer (NOBILTA (Hosokawa Micron Corporation)) at a weight ratio of about 99:1 and mixed at about 2500 rpm for about 8 minutes to prepare a composite positive electrode active material CCM having a graphene coating layer COT formed or provided thereon.

### Positive Electrode

100 wt% of the composite positive electrode active material CCM was mixed with an N-methylpyrrolidone solvent to prepare a positive electrode slurry. The positive electrode slurry was applied to an aluminum current collector, dried, and rolled to form or provide a positive electrode. The positive electrode slurry was applied to the current collector so as to have a loading level of about 20 g/cm². The rolling was performed using a rolling mill so that the total thickness of the current collector and the positive electrode active material layer AML1 was about 62.5 µm.

### Manufacture of Half-cell

A coin-type or kind half-cell was manufactured using the positive electrode, a lithium metal counter electrode, and an electrolyte. The electrolyte used was ethylene carbonate and diethyl carbonate (volume ratio of about 50:50) containing 1.0 M LiPF₆ dissolved therein.

### Comparative Example 1-1

### Positive Electrode

98.5 wt% of lithium cobalt-based oxide (LiCoO₂, LCO) large particles having an average particle diameter of about 12 µm, 1.0 wt% of a PVDF binder, and 0.5 wt% of a conductive (e.g., electrically conductive) material (carbon nanotube) were mixed in an N-methylpyrrolidone solvent to prepare a positive electrode slurry. The positive electrode slurry was applied to an aluminum current collector, dried, and rolled to prepare a positive electrode. The positive electrode slurry was applied to the current collector so as to have a loading level of about 20 g/cm². The rolling was performed using a rolling mill so that the total thickness of the current collector and the positive electrode active material layer AML1 was about 62.5 µm.

### Manufacture of Half-cell

A coin-type or kind half-cell was manufactured using the positive electrode, a lithium metal counter electrode, and an electrolyte. The electrolyte used was ethylene carbonate and diethyl carbonate (volume ratio of about 50:50) in which 1.0 M LiPF₆ was dissolved.

### Comparative Example 1-2

### Positive Electrode

99.0 wt% of lithium cobalt-based oxide (LiCoO₂, LCO) large particles having an average particle diameter of about 12 µm, 0.5 wt% of a PVDF binder, and 0.5 wt% of a conductive (e.g., electrically conductive) material (carbon nanotube) were mixed in an N-methylpyrrolidone solvent to prepare a positive electrode slurry. The positive electrode slurry was applied to an aluminum current collector, dried, and rolled to prepare a positive electrode. The positive electrode slurry was applied to the current collector so as to have a loading level of about 20 g/cm². The rolling was performed using a rolling mill so that the total thickness of the current collector and the positive electrode active material layer AML1 was about 62.5 µm.

### Manufacture of Half-cell

A coin-type or kind half-cell was manufactured using the positive electrode, a lithium metal counter electrode, and an electrolyte. The electrolyte used was ethylene carbonate and diethyl carbonate (volume ratio of about 50:50) in which 1.0 M LiPF₆ was dissolved.

### Comparative Example 2

A composite positive electrode active material, a positive electrode, and a half-cell were formed or provided in substantially the same manner as in Example 1 except that, in the preparation of a composite positive electrode active material, the lithium cobalt-based oxide and the surface-modified graphene prepared according to Preparation Example 1 were added to a mixer (NOBILTA (Hosokawa Micron Corporation)) at a weight ratio of about 98.5:1.5, and mixed at about 3000 rpm for about 30 minutes.

### Comparative Example 3

A composite positive electrode active material, a positive electrode, and a half-cell were formed or provided in substantially the same manner as in Example 1 except that, in the preparation of a composite positive electrode active material, the lithium cobalt-based oxide and the surface-modified graphene prepared according to Preparation Example 1 were added to a mixer (NOBILTA (Hosokawa Micron Corporation)) at a weight ratio of about 98.8:1.2, and mixed at about 3500 rpm for about 15 minutes.

### Comparative Example 4

A composite positive electrode active material, a positive electrode, and a half-cell were formed or provided in substantially the same manner as in Example 1 except that, in the preparation of a composite positive electrode active material, the lithium cobalt-based oxide and the surface-modified graphene prepared according to Preparation Example 1 were added to a mixer (NOBILTA (Hosokawa Micron Corporation)) at a weight ratio of about 99.8:0.2, and mixed at about 2000 rpm for about 10 minutes.

### Comparative Example 5

A composite positive electrode active material, a positive electrode, and a half-cell were formed or provided in substantially the same manner as in Example 4 except that, in the preparation of a composite positive electrode active material, the lithium cobalt-based oxide and the surface-modified graphene prepared according to Preparation Example 2 were added to a mixer (NOBILTA (Hosokawa Micron Corporation)) at a weight ratio of about 98.5:1.5, and mixed at about 3000 rpm for about 30 minutes.

### Comparative Example 6

A composite positive electrode active material, a positive electrode, and a half-cell were formed or provided in substantially the same manner as in Example 4 except that, in the preparation of a composite positive electrode active material, the lithium cobalt-based oxide and the surface-modified graphene prepared according to Preparation Example 2 were added to a mixer (NOBILTA (Hosokawa Micron Corporation)) at a weight ratio of about 98.8:1.2, and mixed at about 3500 rpm for about 15 minutes.

In the composite positive electrode active materials prepared according to Examples 1 to 4 and Comparative Examples 2 and 3, the ratio of the area occupied by (or coated by) the graphene coating layer to the total area of the outer surface of the active material core was measured, and the results are shown in Table 1. For example, in 20 randomly selected composite positive electrode active materials, the ratio of the area occupied by (or coated by) the graphene coating layer to the total area of the outer surface of the active material core was measured, and the average thereof is shown in Table 1. After SEM-EDS mapping of each composite positive electrode active material, the area where carbon and other elements not included in the active material are distributed was defined as the graphene coating layer, and the ratio of the area occupied by (or coated by) the graphene coating layer on the active material core was calculated.

**Table 1**

| Division | Graphene modified with adhesive material | Ratio of area occupied by (or coated by) graphene coating layer to total area of outer surface of active material core (%) |
|---|---|---|
| Example 1 | Graphene of Preparation Example 1 | 45 |
| Example 2 | Graphene of Preparation Example 1 | 42 |
| Example 3 | Graphene of Preparation Example 1 | 36 |
| Example 4 | Graphene of Preparation Example 2 | 43 |
| Comparative Example 1-1 | Unused | - |
| Comparative Example 1-2 | Unused | - |
| Comparative Example 2 | Graphene of Preparation Example 1 | 82 |
| Comparative Example 3 | Graphene of Preparation Example 1 | 74 |
| Comparative Example 4 | Graphene of Preparation Example 1 | 24 |
| Comparative Example 5 | Graphene of Preparation Example 2 | 78 |
| Comparative Example 6 | Graphene of Preparation Example 2 | 72 |

### Evaluation Example 1: Performance Evaluation of Positive Electrode

The electrical conductivity and ionic resistance of the positive electrodes according to Examples 1 to 4 and Comparative Examples 1-1 to 6 were measured and shown in Table 2. The electrical conductivity of the positive electrode was calculated by a Van der Pauw method using a multifunction ammeter (Multimeter 2000/E, Keithley, USA). The ionic resistance of the positive electrode was measured by electrochemical impedance spectroscopy (EIS) of a positive electrode symmetry cell including the positive electrode. A positive electrode having a diameter of about 14 mm and an electrode area (d) of about 1.54 cm² was manufactured using a circular electrode punching machine (Wellcos Corporation, WCH-125). The electrode plate adhesive strength was measured by attaching a double-sided tape to a slide glass, attaching the electrode plate coating surface to the tape, and then lifting the coated surface using an adhesive strength meter. The electrical conductivity (S/cm), ionic resistance (Rᵢₒₙ), and adhesive strength value of Comparative Example 1-1 were each converted to 100%, set as a reference value, and then the relative values of the electrical conductivity, ionic resistance, and adhesive strength of each Example and Comparative Example were compared, and the results are shown in Table 2.

**Table 2**

| | Electrode plate | | |
|---|---|---|---|
| Division | Electrical conductivity (%) | Ionic resistance Rᵢₒₙ (%) | Adhesive strength (%) |
| Example 1 | 110 | 84 | 80 |
| Example 2 | 120 | 82 | 78 |
| Example 3 | 115 | 80 | 75 |
| Example 4 | 113 | 83 | 78 |
| Example 5 | 110 | 70 | 95 |
| Comparative Example 1-1 | 100 | 100 | 100 |
| Comparative Example 1-2 | 110 | 90 | 70 |
| Comparative Example 2 | 70 | 87 | 110 |
| Comparative Example 3 | 73 | 86 | 100 |
| Comparative Example 4 | 120 | 95 | 75 |
| Comparative Example 5 | 72 | 85 | 106 |
| Comparative Example 6 | 74 | 84 | 95 |

Referring to Table 2, it may be confirmed that the positive electrodes according to the Examples have excellent or suitable electrical conductivity and ionic resistance characteristics. For example, it may be confirmed that the positive electrode according to Example 5 has excellent or suitable adhesion characteristics.

### Evaluation Example 2: Discharge Rate Characteristics and Lifespan Evaluation of Coin Half-cell

The discharge rate characteristics were measured for the half-cells of the Examples and Comparative Examples. The rate characteristics were defined as the ratio of about 2 C capacity to about 0.2 C capacity when discharging at about 0.2 C and about 2 C after about 0.2 C CCCV charging. Also, after performing 50 cycles of about 0.5 C charging and discharging at room temperature, the "capacity maintenance ratio of the 50th cycle" was calculated compared to the discharge capacity of the first cycle. After that, the rate characteristics of Comparative Example 1-1 and the value of "capacity maintenance ratio of the 50th cycle" was converted to 100% and set as the reference value, and then the relative values of the rate characteristics and "capacity maintenance ratio of the 50th cycle" of each Example and Comparative Example were compared, and the results are shown in Table 3.

**Table 3**

| Division | Rate characteristics (2 C discharge capacity/0.1 C discharge capacity) (%) | Lifespan 0.5 C/0.5 C @ 25 °C (@ 50 CYC) (%) |
|---|---|---|
| Example 1 | 131 | 104.8 |
| Example 2 | 146 | 114.1 |
| Example 3 | 144 | 107.8 |
| Example 4 | 136 | 106.2 |
| Example 5 | 157 | 149.3 |
| Comparative Example 1-1 | 100 | 100.0 |
| Comparative Example 1-2 | 122 | 80.0 |
| Comparative Example 2 | 80 | 88.5 |
| Comparative Example 3 | 85 | 84.9 |
| Comparative Example 4 | 126 | 94.7 |
| Comparative Example 5 | 85 | 89.8 |
| Comparative Example 6 | 88 | 83.7 |

Referring to Table 3, it may be confirmed that the rechargeable lithium batteries (half cells) according to the Examples have excellent or suitable rate characteristics and life characteristics. For example, it may be confirmed that the rate characteristics and life characteristics of the rechargeable lithium battery according to Example 5 are very excellent or suitable.

### Evaluation Example 3: Charge and Discharge Efficiency

The charge and discharge efficiency was measured for the half cells according to Example 1 and Comparative Example 1-1, which have similar contents (e.g., amounts) of lithium transition metal composite oxides. Each half cell was subjected to about 4.5 V cut-off charge and discharge once at about 0.2 C, and the charge and discharge capacity was measured. The charge and discharge efficiency ((discharge capacity/charge capacity)*100) was measured with this charge and discharge capacity, and the results are shown in Table 4.

**Table 4**

| Division | Charge capacity (mAh/g) | Discharge capacity (mAh/g) | Charge and discharge efficiency (%) |
|---|---|---|---|
| Example 1 | 196.5 | 193.1 | 98.26 |
| Comparative Example 1-1 | 194.2 | 186.4 | 95.98 |

Referring to Table 4, it may be confirmed that the positive electrode containing the composite positive electrode active material has superior charge and discharge capacity and charge and discharge efficiency compared to the positive electrode using a common positive electrode active material.

The composite positive electrode active material according to one or more embodiments of the present disclosure may have adhesiveness and conductivity (e.g., electrical conductivity). Accordingly, the contents (e.g., amounts) of a conductive (e.g., electrically conductive) material and a binder additionally added to a positive electrode may be reduced, thereby improving or enhancing the electrical conductivity and ionic resistance in the positive electrode.

The positive electrode according to one or more embodiments of the present disclosure may include the composite positive electrode active material and may have excellent or suitable electrical conductivity and ionic resistance.

While this disclosure has been described in connection with what is presently considered to be practical example embodiments, it is to be understood that embodiments of the present disclosure are not limited to the disclosed embodiments and is intended to cover one or more suitable modifications and equivalent arrangements included within the spirit and scope of the appended claims, equivalents thereof, and therefore the aforementioned embodiments should be understood to be exemplarily but not limiting this disclosure in any way.

## Claims

1. A composite positive electrode active material comprising:
an active material core; and
a graphene coating layer partially coated on the active material core and comprising graphene having a surface modified with an adhesive material.

2. The composite positive electrode active material as claimed in claim 1, wherein the adhesive material is a polymer comprising at least one functional group selected from the group consisting of a hydroxyl group, a carboxyl group, an amine group, an aniline group, a nitrile group, an ester group, a carbon-carbon double bond, an imide group, a phenyl group, a urethane group, a butyral group, and a lactam group.

3. The composite positive electrode active material as claimed in claim 1 or 2, wherein the adhesive material comprises at least one selected from among polyvinyl alcohol, polyvinyl acetate, polyacrylic acid, polyethylene, polyimide, polystyrene, polyurethane, polyacrylonitrile, polyvinyl butyral, polyisoprene, polyaniline, and polyvinylpyrrolidone.

4. The composite positive electrode active material as claimed in any one of claims 1 to 3, wherein a ratio of an area coated by the graphene coating layer to an outer surface area of the active material core is 30% to 70%.

5. The composite positive electrode active material as claimed in any one of claims 1 to 5, wherein the active material core comprises at least one of a lithium nickel-based oxide, a lithium cobalt-based oxide, a lithium manganese-based oxide, a lithium iron phosphate-based compound, a cobalt-free lithium-nickel-manganese-based oxide, or any combination thereof.

6. The composite positive electrode active material as claimed in any one of claims 1 to 5, wherein:
the active material core comprises a lithium cobalt-based oxide represented by Chemical Formula 4:
Chemical Formula 4 Liₐ₄COₓ₄M⁶₍₁₋ₓ₄₎O₂
wherein, in Chemical Formula 4, 0.9≤a4≤1.8, 0.7≤x4≤1, and M⁶ is at least one element selected from the group consisting of Al, B, Ba, Ca, Ce, Cr, Cu, F, Fe, Mg, Mn, Mo, Ni, P, S, Se, Si, Sr, Ti, V, W, Y, Zn, and Zr,
the composite positive electrode active material further comprises at least one selected from large particles and small particles,
the large particles have an average particle diameter of 6.0 µm to 20.0 µm, and
the small particles have an average particle diameter of 1.0 µm to 6.0 µm.

7. The composite positive electrode active material as claimed in any one of claims 1 to 6, wherein the graphene coating layer comprises at least one selected from among graphene, graphene oxide (GO), and reduced graphene oxide (rGO).

8. The composite positive electrode active material as claimed in any one of claims 1 to 7, wherein a thickness of the graphene coating layer is 0.2 nm to 500 nm.

9. A positive electrode comprising:
a current collector and a positive electrode active material layer on the current collector, wherein:
the positive electrode active material layer comprises a composite positive electrode active material according to any one of claims 1 to 8.

10. A method for manufacturing a positive electrode, the method comprising:
preparing a lithium transition metal composite oxide;
preparing graphene having a surface modified with an adhesive material;
providing a composite positive electrode active material through mixing the lithium transition metal composite oxide and the surface-modified graphene;
providing a slurry containing the composite positive electrode active material and a solvent; and
applying the slurry on a current collector and drying.

11. The method as claimed in claim 10, wherein the providing of the composite positive electrode active material is adding 0.01 wt% to 1.5 wt% of the surface-modified graphene based on 100 wt% of the lithium transition metal composite oxide and the surface-modified graphene, and mixing.

12. The method as claimed in claim 10 or 11, wherein the adhesive material comprises at least one selected from among polyvinyl alcohol, polyvinyl acetate, polyacrylic acid, polyethylene, polyimide, polystyrene, polyurethane, polyacrylonitrile, polyvinyl butyral, polyisoprene, polyaniline, and polyvinylpyrrolidone.
